# EUROPEAN PATENT SPECIFICATION

(11) **EP 1 676 874 B1**
(45) Date of publication and mention of the grant of the patent: **17.08.2011**
(21) Application number: 05112827.0
(22) Date of filing: 22.12.2005
(51) Int. Cl.: C08J 9/00, C08L 23/12

(54) **Foamed polypropylene with improved cell structure.**
Polypropylenschaum mit verbesserter Schaumstruktur
Mousse de polypropylène ayant une structure améliorée

(30) Priority: 30.12.2004 US 27442
(43) Date of publication of application: 05.07.2006
(73) Proprietor: TOTAL PETROCHEMICALS RESEARCH FELUY, 7181 Seneffe (Feluy) (BE)
(72) Inventor: Musgrave, Michael, 77062, Houston, Texas (US); Ashbaugh, John, Houston, TX 77040 (US); Lu, Ann Kelly, Friendswood, TX 77546 (US)

(56) References cited:
- EP-A- 0 962 489
- WO-A-02/077092
- PATENT ABSTRACTS OF JAPAN vol. 015, no. 445 (C-0884), 13 November 1991 (1991-11-13) -& JP 03 190980 A (PENTEL KK), 20 August 1991 (1991-08-20)
- P.A. VERBRUGGE; J.H. TIELEMANN; P.J. VAN DER JAGT; F. BICKELHAUPT: "Bridged Compounds By Malonic Ester Synthesis" SYNTHETIC COMMUNICATIONS, vol. 7, no. 1, 1977, pages 1-11, XP009061122

## Description

### Field of the Invention

The present invention relates to foamed polypropylene and methods for making the same, and relates more particularly in one non-limiting embodiment to foamed polypropylene having improved cell structure by using alicyclic carboxylates as crystallization nucleating agents, and methods for making such foamed polypropylene therewith.

### Background of the Invention

Polystyrene has found wide acceptance for use in food service applications because of its good rigidity and shape retention and in the form of foam sheets it is readily molded and thermoformed. However, polystyrene articles suffer from low service temperature, and generally are fragile and lack chemical resistance. The food service and packaging industries need alternative materials that do not have these undesirable characteristics.

Polyolefin resins are known for their ease of fabrication and are found in a wide variety of applications. Propylene polymers, or polypropylene resins, are particularly noted for their good heat resistance and mechanical properties, and resin formulations based on polypropylene are supplied to meet the demands imposed by many structural and decorative applications such as in the production of molded parts for appliances, household goods and autos. Impact-modified polypropylene and elastomeric ethylene-propylene copolymers have found utility in automotive applications including interior trim as well as in exterior parts such as bumper facia, grill components, rocker panels and the like. Polypropylene resins have the thermal and chemical resistance to withstand exposure to the wide variety of environments encountered in automotive uses, and are easily molded at a cost far below that of metal stamping to provide parts that resist rust and corrosion and are impact resistant, even at low temperature. Considerable effort has been expended in recent years to develop rigid expanded or foamed polyolefin sheet as a replacement for and alternative to polystyrene foams, particularly for use in food service applications.

The use of polypropylene in foaming applications has been limited due to problems with cell coalescence and loss of blowing agent. Molecular tailoring of the polypropylene backbone to produce branching or the use of a broader molecular weight polypropylene incorporating higher molecular weight chains have both been tried to obtain good cell structure. It would be desirable if alternative approaches could be devised to improve the cell structure in foamed polypropylene to permit it to be used in applications for food service and other uses.

### Summary of the Invention

There is provided, in one form, a process for a method for producing foamed polypropylene that involves foaming polypropylene in the presence of an alicyclic carboxylate crystallization nucleating agent and a blowing agent.

In another embodiment herein, there is provided a polypropylene resin for foaming applications that includes polypropylene and an alicyclic carboxylate crystallization nucleating agent.

Another non-limiting embodiment involves extruded foam sheets made by the foaming and extruding polypropylene in the presence of an alicyclic carboxylate crystallization nucleating agent and a blowing agent.

In another non-restrictive embodiment there are provided molded articles made by foaming and molding polypropylene in the presence of an alicyclic carboxylate crystallization nucleating agent and a blowing agent.

### Brief Description of the Drawings

FIG. 1 is chart of foam sheet thickness as a function of melt temperature for a control and three different crystallization nucleating agents;

FIG. 2 is a series of optical micrographs of the cross-sections of the foamed sheets for Examples 1-4;

FIG. 3 is an optical micrograph of the cross-section of the foamed sheet sample of Example 5 using a HMS EC-6 resin;

FIG. 4 is an optical micrograph of a cross-section of the foamed sheet sample of Example 6 using ATOFINA 3276 resin;

FIG. 5 is an optical micrograph of a cross-section of the foamed sheet sample of Example 7 using a 50/50 wt% blend of EOD02-36 and ATOFINA 3276 resin;

FIG. 6 is an optical micrograph of a cross-section of the foamed sheet sample of Example 8 using a 50/50 wt% blend of EOD02-36 and EOD00-28; and

FIG. 7 is an optical micrograph of a cross-section of the foamed sheet sample of Example 9 using EOD02-36 resin.

### Detailed Description of the Invention

It has been discovered that alicyclic carbonates improve the foaming of polypropylene by increasing the rate of polypropylene crystallization. The increased crystallization rate caused by these nucleating agents freezes in the cell structure before rupture, thus reducing cell coalescence and limiting blowing agent loss. It has also been found that alicyclic carbonates may be used at lower levels than other crystallization nucleating agents such as sodium benzoate, talc, and the like.

Nearly all types of polypropylene are expected to be useful in the method and compositions herein, including isotactic polypropylene and syndiotactic polypropylene. However, atactic polypropylene is not expected to be applicable herein because it does not crystallize. The inventive methods and compositions are generally applicable to medium foam density, which is defined herein as foam having densities in the range of about 0.7 to about 0.4 g/cm³, and also possibly low density foam defined as having densities in the range of about 0.4 to about 0.001 g/cm³. Polypropylene with broad processing properties is expected to find benefit with the methods and agents herein, including those utilizing a chemical blowing agent within an extrusion melt temperature range of about 380°F to about 420°F (about 193 to about 216°C) and broader.

The polypropylene resins herein include those useful in the extrusion of thermoformable, rigid, foamed polypropylene as well as those useful to make molded articles. Such polyolefins are defined herein to include substantially linear polypropylene homopolymer, or a copolymer of propylene and a minor amount, up to about 30 wt%, in another non-limiting embodiment up to about 20 wt% of an alpha-olefin which may have up to 6 carbon atoms. In one non-restrictive form, the comonomer used to make a random copolymer is ethylene. The polymers are readily prepared by a variety of catalyzed polymerization processes well known in the art, including processes employing Ziegler-Natta catalysts and those based on metallocene catalysts. The polypropylene may or may not include branching. The melt flow index of the polymer will be from about 0.3 to about 10, and in another non-limiting embodiment from about 1.0 to about 4.0 g/10 min., determined according to ASTM D1238, Condition L.

It has been generally believed that high melt strength resin formulations may be helpful to successfully extrude foamed polypropylene having good cell structure and acceptable surface appearance, and specialty formulations having particular grades of propylene resins with particularly defined molecular weight and rheological properties including an optional bimodal molecular weight distribution and/or a highly branched minor component have been developed for these uses. Blend compositions having good melt strength have also been formulated using polypropylene that has been modified, for example through crosslinking, or with particular polymeric additives, highly branched olefin polymers or the like. Although these specialty resin grades and resin formulations are suitable for use in the practice of the methods and compositions herein, suitable foam sheet and molded articles may be readily produced from other readily available generic grades of polypropylene, *i.e.* propylene polymer resins with monomodal or bimodal molecular weight distributions and without a significant level of branching, hence such specialty resin compositions are not required herein.

As is known in the art, foamable polypropylene compositions will further comprise a gas or blowing agent and a crystallization nucleating agent.

There are generally two techniques that can be used to foam plastic materials. The direct gas injection technique involves directly injecting the gas into the molten polymer. The gas is typically nitrogen or pentane. There is a gas inlet port through which the gas is injected. However, there may be many discrepancies in the parts produced by this method. This may be due to the uneven distribution of the gas in the melt and also due to handling problems, since it may be difficult to handle pressurized gases at times. However this method does find some use in injection molding large parts for automotive applications.

The second technique involves the use of blowing agents (e.g. foam concentrates). This method is widely used for foaming purposes. The blowing agent may either be in the powder form or master batch form. The master batches may have different concentrations. It is generally much easier to handle powders or master batches than to handle gases. Calculated amounts of the blowing agent concentrates are premixed with the polymer to be foamed. The gas is released in the melt in the barrel itself. The melt is under pressure and thus the foaming takes place either at the exit of the die or in the mold depending on the type of process.

Chemical blowing agents are classified into two categories: endothermic blowing agents, which absorb heat when they decompose, and exothermic blowing agents, which liberate heat when they decompose. For some applications, an exothermic blowing agent may be more desired over endothermic blowing agents because an exothermic blowing agent has a single and sharp decomposition temperature. A comparison between the two types of blowing agents with regard to some parameters is given below. Blowing agents suitable for the methods and compositions herein include many of these used singly, or in combination.

Gas Yield - Endothermic blowing agents are usually made up of inorganic materials. These inorganic blowing agents yield an amount of gas in the range of about 100-130 cm³/gm. Exothermic blowing agents yield a gas in the range of about 200-220 cm³/gm. Thus, for any given foaming application the amount of endothermic blowing agent required is about twice that of the exothermic agent.

Gas Types - Some endothermic blowing agents release carbon dioxide, water, and solid sodium carbonate as by-products. The sodium carbonate will react with the ambient moisture and sometimes leave a whitish residue on the processing equipment. The azo-type exothermic blowing agents liberate ammonia and nitrogen. The ammonia liberated has a pungent odor. Sometimes, when the exothermic blowing agents are decomposed, the byproduct is cyanuric acid. This is detrimental to the processing equipment, so the manufacturers often incorporate additives to prevent the formation of cyanuric acid.

Toxicity - The toxicity levels in endothermic blowing agents are very low and so they are widely used in the medical and food industry. Exothermic blowing agents have relatively higher toxicity and so the Food and Drug Administration has sanctioned only certain types to be used in the food and medical industry.

Some of the exothermic blowing agents will now be discussed with more specificity. (1) Azo and Diazo Compounds: Azo compounds contain aliphatic groups and are present in a number of different structures. The structure of the group dictates the thermal stability of the compounds. The structures that contain groups with an iso- structure are generally less stable. These compounds decompose at different temperatures depending on the groups present. The main product of decomposition is nitrogen gas along with gases such as methane, ethane, ethanol, propane and others that are formed in trace amounts. The blowing agents of these types are used for foaming thermoplastic polymers including polyethylene, polystyrene, and PVC. (2) N-Nitroso Compounds: Compounds containing the nitrosoamine group along with different organic groups fall under this group. N, N'-Dinitrosopentamethyltetramine is the most widely used blowing agent, accounting for 50% of the blowing agents used, but suitable N-nitroso compounds are not limited to this example. The gas liberated by this compound depends on the type of decomposition promoter used. The gaseous products mainly consist of carbon dioxide and nitrogen. The most effective decomposition temperature for this blowing agent is 160°C. (3) Sulfonylhydrazides: Benzosulfonylhydrazide is one non-limiting example this type of blowing agent. This is a colorless and odorless compound with a decomposition temperature of 130-140°C. On decomposition this blowing agent not only evolves nitrogen but it also leaves nontoxic residue that is a mixture of disulfide and thiosulfone. This blowing agent is best suited for foaming rubbers, phenol resin modified with silicones, polystyrene, epoxy resin and polyesters. (4) Azides: Blowing agents containing an azide group are mainly the derivatives of carboxylic and sulfonic acids. They have a decomposition temperature range of 85-112°C with the liberation of up to 207 cm³/g.

Some of the endothermic as well as enexothermic blowing agents include, but are not necessarily limited to: (1) SAFOAM® FPE-50 endothermic blowing agent is available in the form of pellets and is manufactured by Reedy International Corporation. The active ingredients present are encapsulated sodium bicarbonate and citric acid. The recommended peak processing temperature for this endothermic blowing agent is 158°C-183°C. On decomposition it evolves carbon dioxide gas. A commercially available master batch is made up of 50% of the endothermic blowing agent and the rest is the base resin polyethylene. Addition levels of 0.5-2.5 % have been recommended. The gas evolved by SAFOAM® FPE-50 is about 50.5 cm³/g. (2) EXOCEROL® CT-1210 is sometimes also referred to as enexothermal blowing agent and is available in the form of pellets. It is manufactured by Clariant Masterbatches Inc. The chemical name for the exothermic part of CT-1210 is azodicarbonamide and the endothermic part of CT-1210 is based on a modified azodicarbonamide, sodium bicarbonate and citric acid. The recommended peak processing temperature for this exothermic blowing agent is 170-210°C. On decomposition it evolves nitrogen and carbon dioxide gases. It contains 50% of the exothermic blowing agent and 50% endothermic blowing agent in a universal carrier. Additive levels of 0.2-2.4 % have been recommended. The gases evolved by CT-1210 are in the range of 60 cm³/gram.

Other non-limiting examples of blowing agents known and widely used for the production of expanded polystyrene and polyolefins including polypropylene, include, but are not necessarily limited to, organic blowing agents such as, for example, azodicarbonamide, diazoaminobenzene, azo-bis-isobutyronitrile and analogs thereof, and inorganic blowing agents such as, for example, ammonium carbonate, sodium bicarbonate and the like. Physical blowing agents such as nitrogen, carbon dioxide and other inert gases and agents that undergo phase change from liquid to gas during the foaming process such as chlorofluorocarbons (CFC), HCFCs, low boiling alcohols, ketones and hydrocarbons, are also known for these uses and may also be found useful in the practice of the compositions and methods herein. The blowing agent may further comprise one or more additives to reduce its decomposition temperature.

The amount of blowing agent to be used depends on its nature and on the desired density for the expanded polypropylene and will be selected according to practices well understood by those skilled in the resin formulating art. Generally, blowing agents are available to the trade in the form of concentrates; the concentrates will be added to the formulation at levels that will provide from about 0.2 to about 10 wt% active foaming agent, in one non-limiting embodiment from about 0.25 to about 5 wt%, in another non-restrictive form from about 0.4 to about 5 wt% active foaming agent, and alternatively from about 1 to about 3 wt%, based on total weight of the formulation. The amounts of physical blowing agents such as liquid blowing agents and inert gases needed to provide the desired foam densities may readily be determined according to common commercial practice.

An important part of the method is the use of a crystallization nucleating agent to increase number of crystallization nuclei in the molten polypropylene, thereby increasing the crystallization rate and promoting crystallization from the melt, solidifying the resin at a higher temperature and freezing the cell structure before rupture. Generally, non-nucleated polypropylene will begin crystallizing at around 120°C with a peak in crystallization rate near 110°C. Nucleated polypropylene resins may start to crystallize at temperatures as great as about 135 to about 140°C, with a peak around 130°C. Nucleated resin will solidify rapidly with improved melt strength to thereby reduce sag in the extruded foam sheet.

The crystallization nucleating agents herein will generally be used in an amount of less than about 0.05 wt%, and in another non-limiting embodiment less than about 0.04 wt% (400 ppm), where a lower limit may be about 0.001 wt%, all based on the polypropylene. In another non-restrictive form the crystallization nucleating agent is used within the range of about 0.005 to about 0.04 wt%, where 0.005 wt% is an alternative lower limit. A practical upper threshold is about 0.5 wt%. At that level and above additional crystallization nucleating agent will not provide additional benefit and may be wasted. Most of these proportions for the level of crystallization nucleating agent are lower than previously taught.

The first or only crystallization nucleating agent used herein is an alicyclic carboxylate. Suitable alicyclic carboxylates include, but are not necessarily limited to alicyclic norbonane dicarboxylates. Other compounds and compositions comprising specific derivatives, such as diesters, diacids, diamides, partial esters, partial acids, partial amides, partial ester salts, and the like, of bicyclo[2.2.1]heptane and mixtures thereof are also included. It has been found that a particularly useful alicyclic norbonane carboxylate is alicyclic norbonane sodium dicarboxylate of formula (I): 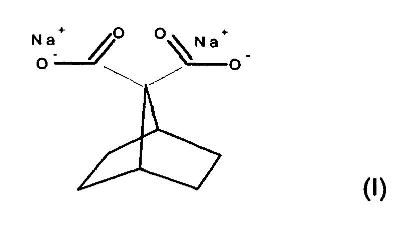 As noted, it has been discovered that these materials may be used at lower levels than other crystallization nucleating agents, such as sodium benzoate, talc, etc.

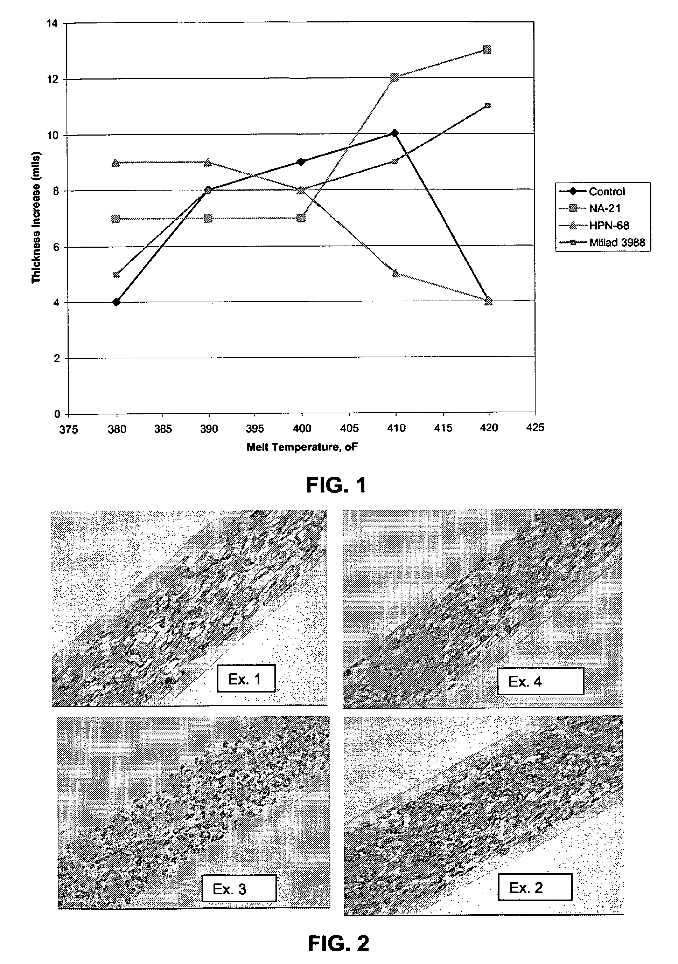

It has also been surprisingly discovered that the use of the alicyclic carboxylates together with other, conventional crystallization nucleating agents helps keep the density of the foamed or expanded polypropylene low over a greater melt temperature range. FIG. 1 is a chart of the thickness of an extruded foam sheet (inversely proportional to density) as a function of melt temperature for a control and three crystallization nucleating agents. AMFINE NA-21 is aluminum bis[2,2'-methylene-bis-(4,6-di-tert-butylphenyl)phosphate crystallization nucleating agent available from Amfine Chemical Corporation. HYPERFORM® HPN-68 nucleating agent is bicyclo[2.2.1]heptane sodium dicarboxylate available from Milliken Chemical. Millad 3988 clarifying agent is 3,4-dimethyldibenzylidene sorbitol available from Milliken Chemical. Sheets samples were produced at melt temperatures of 380°F (193°C), 390°F (199°C), 400°F (204°C), 410°F (210°C), and 420°F (216°C). The results indicate the HPN-68 provides increased sheet thickness, thus lower density, at lower extrusion melt temperatures. The NA-21 nucleator provides a benefit at the higher melt temperature. For instance, from FIG. 1 it may be seen that HYPERFORM HPN-68 gives greater thickness at lower melt temperature and AMFINE NA-21 gives greater thickness at higher melt temperature; thus the use of both of these together could help maintain thickness over a broader melt temperature range.

Examples of other crystallization nucleating agents that may be employed for improving the crystallization speed together with alicyclic carboxylates include, but are not necessarily limited to, organic sodium phosphates such as sodium bis(4-tert-butyl-phenol)phosphate, sodium benzoate and mixtures comprising a monocarboxylic aromatic acid or a polycarboxylic aliphatic acid and a silicate or an alumino-silicate of an alkali or alkaline earth metal. The proportions of these second, or additional nucleating agents may be the same as those given above for alicyclic carboxylates.

Additional optional modifiers and additives for foamable polypropylene compositions known in the art may also be used. Such modifiers and additives may be employed in amounts according to the common practice in the art, including, but not necessarily limited to, lubricants, coloring and/or drying agents, fire-proofing agents, thermal and UV stabilizers, antioxidants, antistatic agents and the like. It will be understood by those skilled in the art that such additional modifiers and additives will be selected to avoid undesirable interaction with the resin, blowing agents and nucleating agents, and will be used at levels appropriate to their function and purpose according to common practice in the foam resin compounding and formulating arts.

The improved foamed polypropylene compositions may optionally also include a bubble nucleating agent. Bubble nucleating agents create sites for bubble initiation and desirably influence cell size and minimize the occurrence of large bubbles and open-cell structure, thereby providing particularly attractive and uniform high quality foam sheet. Use of a bubble nucleating agent in combination with a crystallization nucleating agent also further improves foam processability and melt rheology, as well as desirably enhancing important mechanical and thermal properties of the foam sheet, particularly rigidity or stiffness.

Optional bubble nucleating agents that may be employed in formulating improved compositions useful for foam sheet extrusion and other articles may be selected from the variety of inert solids disclosed in the art to be useful as bubble nucleating agents, including, but not necessarily limited to, mixtures of citric acid and sodium bicarbonate or other alkali metal bicarbonate, talc, silicon dioxide, diatomaceous earth, kaolin, polycarboxylic acids and their salts, and titanium dioxide. Other inert solids disclosed in the art for these purposes may also be found suitable. The nucleating agent may have a mean particle size in the range of from about 0.3 to about 5.0 microns (µm), and will be present at a concentration of up to about 5 wt%, in another non-limiting embodiment from about 0.01 to about 5 wt%, and alternatively from about 0.5 to about 2 wt% of the total weight of the formulation. At higher concentrations the cell structure becomes undesirably small; further, the nucleating agent tends to agglomerate during processing.

A wide variety of compounding and blending methods are well-known and commonly used in the art and most may be adapted to mix and compound the components of foamable polypropylene formulations herein. Conveniently, the resin together with crystallization nucleating agents and further optional additives and modifying components that are not thermally sensitive, whether in powder, pellet, or other suitable form, may be mixed and melt compounded using a high shear mixer, e.g., a twin-screw extruder at temperatures effective to render the resinous components molten and obtain a desirably uniform blend. Thermally sensitive components of the formulations, including blowing agents, may be physically mixed with the resin in powder or pellet form using conventional dry-blending methods just prior to feeding the mixture to the extruder. Plasticating the resin in a compounding extruder and feeding the additives and modifying components to the molten composition through a port in the extruder is also commonly practiced in the art. Downstream addition to the melt also may be found particularly useful for foam sheet extrusion where a physical blowing agent in the form of a gas is employed.

Polypropylene foam sheet produced from the improved polypropylene compositions herein may be used in a conventional thermoforming operation to form rigid and semi-rigid articles. Typically, articles are formed from sheet having a thickness of from about 10 mils (0.25 mm) up to 200 mils (5 mm) or above. A thermoformed article typically ranges from about 20 to 80mils (0.5-2 mm). Generally, processes for thermoforming foam sheet include the steps of heating the foam sheet to a temperature where it is deformable under pressure or vacuum, supplying the softened foam sheet to a forming mold, and cooling the foam sheet to form a rigid or semi-rigid article having the shape of the mold. To avoid collapsing the foam structure of the sheet, the temperature employed in the heating step usually falls in a narrow range which does not exceed the melt temperature of the resin. The processing window or temperature range for thermoforming, and particularly the upper temperature limit, may be conveniently assessed by a thermomechanical analysis procedure involving heating a sample of the sheet while monitoring the change in thickness of the sheet as a function of temperature using a thermomechanical analyzer probe. Upon reaching and then exceeding the upper limit of the processing range, the thickness of the sheet will be observed to rapidly decrease as the foam structure collapses and the probe penetrates the sheet. Generally, extruded foam sheet comprising polypropylene may be processed with good retention of foam structure at temperatures of from about 130° to about 145°C, and particular formulations may be found to be processable at temperatures as great as 150°C while retaining foam structure.

In another aspect, a surface layer may be applied by conventional coextrusion techniques. Typically, top and bottom surface layers with thickness ratios of the layer to the foam core of about 1:1000 and in another non-restrictive embodiment about 1:2000 or above may be used, although surface layers thicker than this are used in the experiments herein. In one non-limiting embodiment, the surface layer is a propylene polymer with a similar composition to the foam core (except for blowing agents), although any compatible propylene polymer may be used. Also, if desired, a barrier resin layer also may be applied such as polyethylene or ethylenevinylacetate polymer. An advantage of using co-extruded surface layers is incorporating pigments or other specialized additives to the surface layers. Since the amount of surface layer is much smaller than the foam core, the use of pigments or other additives is minimized. This may be beneficial in recycling the article.

Improved extruded polypropylene foam sheet has application in a wide variety of physical shapes and forms in addition to molded goods. Rigid and semi-rigid foams, including molded and laminated products prepared therefrom, not only possess good physical properties and excellent chemical resistance at room temperature, but they retain their strength and good performance over a wide range of temperatures and for long periods of time. Molded articles formed from these foam compositions have markedly improved surface appearance and may be particularly useful in food packaging where appearance and cosmetic considerations are important to consumer acceptance. Examples include plates, cups, trays, and containers such as for take-out food and home meal replacement items. Since these articles are made from propylene polymer with a relatively high softening point, the articles typically may be used in a microwave oven. The foam sheet and molded articles may also find wide use in applications where mechanical strength, rigidity and thermal insulation are important considerations, such as in durable goods and appliance components, and in medical and plumbing applications where resistance to hot, humid environments may be particularly important, as well as in safety equipment and protective gear.

Alternatively, molded articles may be made from the foamed or expanded polypropylene herein, such as injection or compression molded articles, according to conventional techniques. Generally, in injection molding powder or pellets are liquefied, injected into a mold, cooled under pressure, and ejected. The blowing agent may be present in the polypropylene resin, or injected simultaneously with the resin into the mold. It is fast, there may be little waste, and it is easy to automate. Compression molding involves squeezing a heated mold around a pre-formed blank. It is relatively slower and the material does not flow as far.

The invention will be better understood by way of consideration of the following illustrative examples and comparative examples, which are provided by way of illustration and not in limitation thereof.

### EXAMPLES 1-4

Sheet samples were produced as described above to evaluate nucleated extrusion grades for improvements in foamed polypropylene. The samples were analyzed using optical microscopy comparing cell size and cell structure. An objective of the project was to determine if alicyclic norbonane sodium dicarboxylate (e.g. Hyperform HPN-68) provided benefits beyond other nucleators for foaming of polypropylene. It was hypothesized the increased rate of crystallization observed in polypropylene containing Hyperform HPN-68 would minimize cell coalescence during foaming. The polypropylene resins used in this study were 2.0 dg/min melt flow rate resins containing different crystallization nucleating agents. Example 1 contains no added crystallization nucleation agent. Example 2 contains 1800 ppm Millad 3988. Example 3 contains 1000 ppm NA-21. Example 4 contains 700 ppm HPN-68.

The foaming work was completed using a mini-coextrusion line to produce three layer A/B/A structured sheet samples. The layer A was ATFOINA 3371, a 2.8 dg/min melt flow rate homopolymer available from TOTAL PETROCHEMICALS, Inc., and the B layer were the four resins mentioned above mixed with a chemical blowing agent (SAFOAM FPE-50 endothermic blowing agent available from Reedy International Corporation). The results indicate that at 400°F, a typical processing temperature used during sheet extrusion of polypropylene, the foamed cell structure of the nucleated sheet samples (Examples 2-4) are smaller and more uniform than the non-nucleated grade (Example 1) as shown in Figure 2. However, as the pictures indicate, the cell structure of the formulation containing HPN-68 foamed sheet (Example 4) does not indicate a particularly significant advantage over the other nucleated grades, at least for these Examples 2-4. The cells of the polypropylene sheet containing HPN-68 (Example 4) appear to be elongated in the machine direction which may be an indication there was slightly more tension on the Example 4 sheet during processing.

### EXAMPLES 5-9

Five foamed polypropylene sheet samples were prepared on a mini-coextrusion line and analyzed. As indicated in Examples 1-4, the addition of a nucleator to polypropylene does improve the cell structure of foamed sheet. This study included a high melt strength (HMS) polypropylene grade designed for foaming used in Example 5. The HMS grade is used commercially for foamed polypropylene applications and is identified as EC-6. An objective was to foam the HMS-PP on the extrusion equipment as a control to other materials being evaluated. Analysis of the HMS-PP resin using C¹³ NMR indicated the HMS grade is a propylene-ethylene random copolymer with 2 wt% incorporated ethylene. The molecular weight distribution of the resin is broad (MWD = 25) and appears bimodal with a high Mz of 8.3 M.

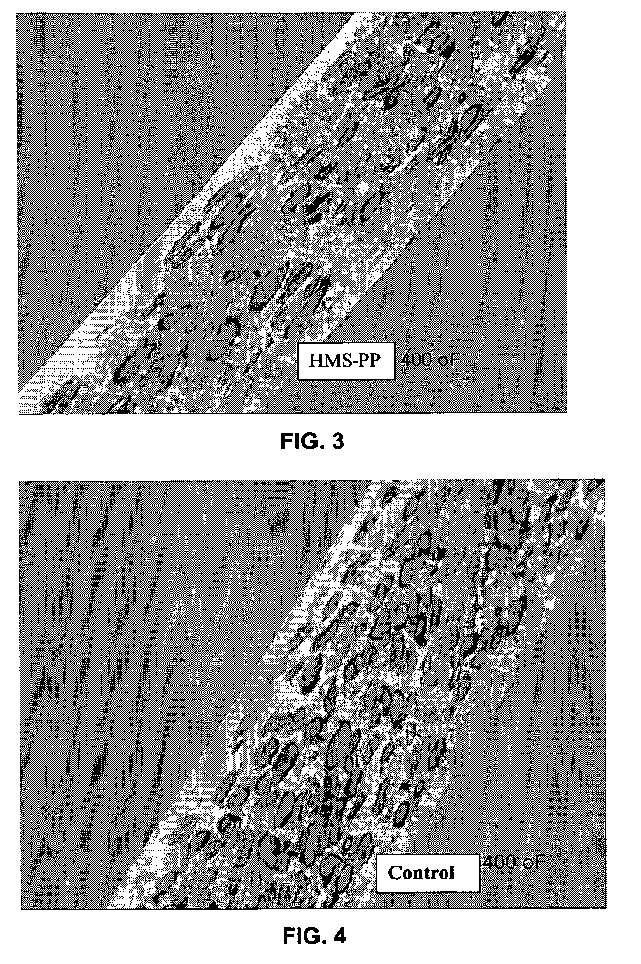

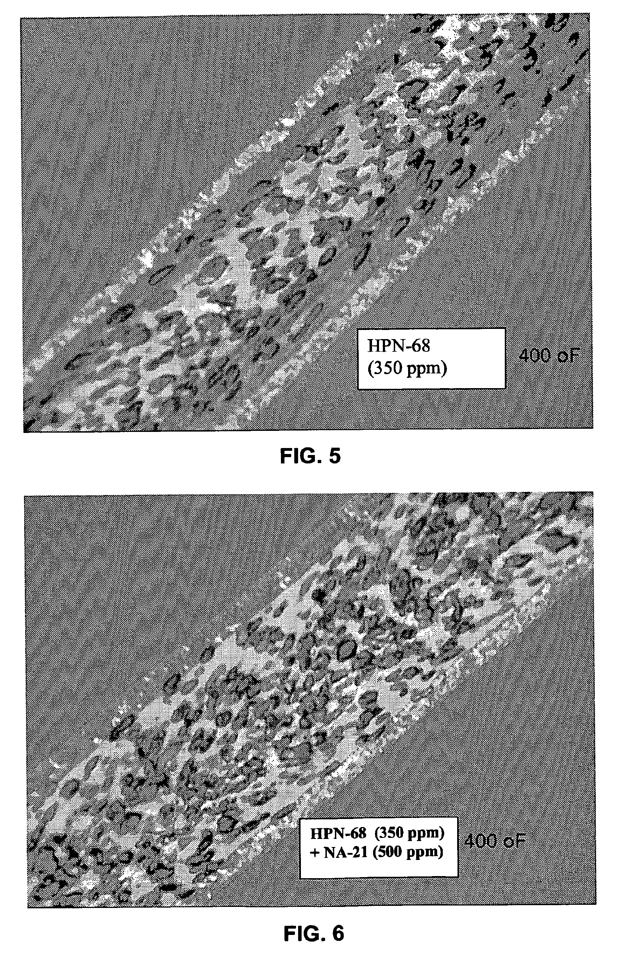

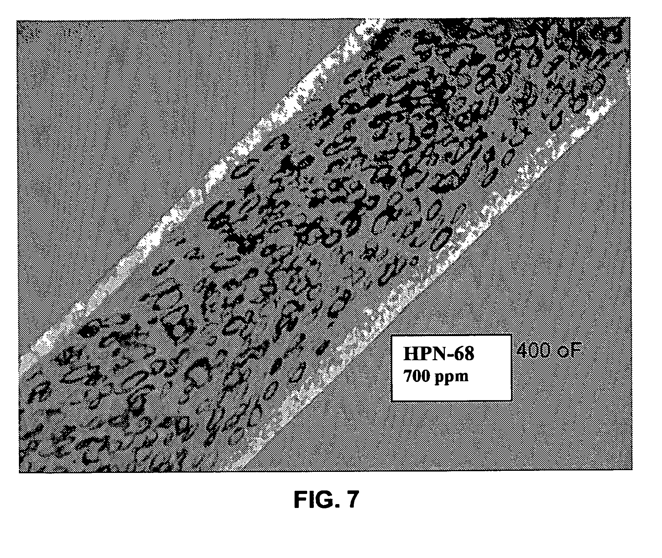

The study also included a 1.8 dg/min melt flow polypropylene containing HPN-68 nucleation agent (used in Example 9, Figure 7); a 2.0 dg/min polypropylene containing no added nucleation agent r (Example 6, Figure 4); a 2.0 dg/min polypropylene containing a mixture of nucleators (500 ppm of NA-21 and 350 ppm of HPN-68). (Example 8, Figure 6) and a 2.0 dg/min polypropylene containing 350 ppm HPN-68 (Example 7, Figure 5). The Example 7 blend effectively reduces the HPN-68 concentration 50% from Example 9. The SAFOAM FPE-50 endothermic chemical blowing agent was added at 1 wt% for the foaming. The results of the foaming work at 400°F indicate the polypropylene formulation of Example 9 performs the best in terms of cell structure and density. The results are summarized in Table I and optical micrographs of the cross-section of the sheets are shown in FIGS. 3-7 as identified in Table I. The results indicate a 50% density reduction was obtained using the formulation for Example 9 at these conditions as contrasted with a 35% density reduction for the HMS-PP grade Example 5.

**Table I**

| Summary of Results for Foamed PP Sheet Samples | | | | |
|---|---|---|---|---|
| **Ex.** | **Fig.** | **Material** | **Foamed Layer Density (g/cm³)** | **Observations - Cell Structures and Densities** |
| 5 | 3 | HMS-PP (no nucleator) | 0.55 | Few large cells, coalescence observed |
| 6 | 4 | PP control (no nucleator) | 0.52 | Large distribution of cell sizes, cell coalescence observed |
| 7 | 5 | HPN-68 (350 ppm) | 0.50 | Smaller more uniform cell size and distribution, not as dense a population as 100% |
| 8 | 6 | NA-21 (500 ppm) ⁺ HPN-68 (350 ppm) | 0.46 | EOD02-36 Small fairly uniform cell size and distribution; high cell density |
| 9 | 7 | HPN-68 (700 ppm) | 0.45 | Small uniform cell size and distribution, high cell density |

The data show that the use of alicyclic carboxylate crystallization nucleating agents improves the foaming of polypropylene by increasing the rate of polypropylene crystallization, which improves freezing of cell structures before rupture, and may do so at relatively low concentrations. The data also show that the use of alicyclic carboxylate agents together with other conventional nucleating agents helps distribute reduction in density over a wider melt temperature range.

## Claims

1. A method for producing foamed polypropylene comprising foaming polypropylene having a melt flow from 0.3 to 10 g/10 min (determined according to ASTM D1238, condition L) in the presence of an alicyclic carboxylate crystallization nucleating agent and a blowing agent, where the amount of blowing agent ranges from 0.25 to 5 wt% based on the polypropylene.

2. The method of claim 1 where the polypropylene has a melt flow from 1.0 to 4.0 g/10 min (determined according to ASTM D1238, condition L).

3. The method of claim 1 where the amount of alicyclic carboxylate is less than 0.05 wt% based on the polypropylene.

4. The method of claim 1 where the amount of alicyclic carboxylate is less than 0.04 wt% based on the polypropylene.

5. The method 1 where the amount of alicyclic carboxylate is in the range of 0.005 to 0.04 wt% based on the polypropylene.

6. The method of claim 1 where the alicyclic carboxylate is selected from the group consisting of diester, diacid, diamide, partial ester, partial acid, partial amide, and partial ester salt derivatives of bicyclo[2.2.1]heptane and mixtures thereof.

7. The method of claim 1 where the alicyclic carboxylate is an alicyclic norbornane dicarboxylate.

8. The method of claim 1 further comprising foaming polypropylene in the presence of a second crystallization nucleating agent different from the alicyclic carboxylate.

9. The method of claim 8 where the second crystallization nucleating agent is selected from the group consisting of organo sodium phosphates, sodium benzoate, carboxylic aromatic acids, carboxylic aliphatic acids, silicates and aluminosilicates of alkali and alkaline earth metals, sugar derivatives, and mixtures thereof.

10. A polypropylene resin for foaming applications comprising polypropylene having a melt flow from 0.3 to 10 g/10 min (determined according to ASTM D1238, condition L), an alicyclic carboxylate crystallization nucleating agent and a blowing agent, where the amount of blowing agent ranges from 0.25 to 5 wt% based on the polypropylene.

11. The resin of claim 10 where the polypropylene has a melt flow from 1.0 to 4.0 g/10 min (determined according to ASTM D1238, condition L).

12. The resin of claim 10 where the amount of alicyclic carboxylate is less than 0.05 wt% based on the polypropylene.

13. The resin of claim 10 where the alicyclic carboxylate is selected from the group consisting of diester, diacid, diamide, partial ester, partial acid, partial amide, and partial ester salt derivatives of bicyclo[2.2.1]heptane and mixtures thereof.

14. The resin of claim 10 where the alicyclic carboxylate is an alicyclic norbomane dicarboxylate.

15. The resin of claim 10 further comprising a second crystallization nucleating agent different from the alicyclic carboxylate.

16. The resin of claim 15 where the second crystallization nucleating agent is selected from the group consisting of organo sodium phosphates, sodium benzoate, carboxylic aromatic acids, carboxylic aliphatic acids, silicates and aluminosilicates of alkali and alkaline earth metals, sugar derivatives, and mixtures thereof.

17. An extruded foam sheet made by the method comprising foaming and extruding polypropylene having a melt flow from 0.3 to 10 g/10 min (determined according to ASTM D1238, condition L) in the presence of an alicyclic carboxylate crystallization nucleating agent and a blowing agent, where the amount of blowing agent ranges from 0.2 to 10 wt% based on the polypropylene.

18. The extruded foam sheet of claim 17 where the polypropylene has a melt flow from 1.0 to 4.0 g/10 min (determined according to ASTM D1238, condition L).

19. The extruded foam sheet of claim 17 where the amount of alicyclic carboxylate is less than 0.05 wt% based on the polypropylene.

20. The extruded foam sheet of claim 17 where the alicyclic carboxylate is selected from the group consisting of diester, diacid, diamide, partial ester, partial acid, partial amide, and partial ester salt derivatives of bicyclo[2.2.1]heptane and mixtures thereof.

21. The extruded foam sheet of claim 17 where the alicyclic carboxylate is an alicyclic norbomane dicarboxylate.

22. The extruded foam sheet of claim 17 where the method further comprises foaming polypropylene in the presence of a second crystallization nucleating agent different from the alicyclic carboxylate.

23. The extruded foam sheet of claim 17 where the second crystallization nucleating agent is selected from the group consisting of organo sodium phosphates, sodium benzoate, carboxylic aromatic acids, carboxylic aliphatic acids, silicates and aluminosilicates of alkali and alkaline earth metals, sugar derivatives, and mixtures thereof.

24. A molded article made by the method comprising foaming and molding polypropylene having a melt flow from 0.3 to 10 g/10 min (determined according to ASTM D1238, condition L) in the presence of an alicyclic carboxylate crystallization nucleating agent and a blowing agent, where the amount of blowing agent ranges from 0.2 to 10 wt% based on the polypropylene.

25. The molded article of claim 24 where the polypropylene has a melt flow from 1.0 to 4.0 g/10 min (determined according to ASTM D1238, condition L).

26. The molded article of claim 24 where the amount of alicyclic carboxylate is less than 0.05 wt% based on the polypropylene.

27. The molded article of claim 24 where the alicyclic carboxylate is selected from the group consisting of diester, diacid, diamide, partial ester, partial acid, partial amide, and partial ester salt derivatives of bicyclo[2.2.1]heptane and mixtures thereof.

28. The molded article of claim 24 where the alicyclic carboxylate is an alicyclic norbornane dicarboxylate.

29. The molded article of claim 24 where the method further comprises foaming polypropylene in the presence of a second crystallization nucleating agent different from the alicyclic carboxylate.

30. The molded article of claim 25 where the second crystallization nucleating agent is selected from the group consisting of organo sodium phosphates, sodium benzoate, carboxylic aromatic acids, carboxylic aliphatic acids, silicates and aluminosilicates of alkali and alkaline earth metals, sugar derivatives, and mixtures thereof.

31. The molded article of claim 24, where the article is selected from the group consisting of plates, cups, trays, containers, tubes, and pipes.

## Patentansprüche

1. Verfahren zur Herstellung von Schaumpolypropylen umfassend ein Schaumpolypropylen mit einem Schmelzfluss von 0,3 bis 10 g/10 min (nach ASTM D1238, Kondition L festgestellt) in Anwesenheit eines alizyklischen Carboxylat-Kristallisierungs-Keimbildners und eines Schaumbildners, wobei die Menge des Schaumbildners in einem Bereich von 0,25 bis 5 Gew.-% basierend auf dem Polypropylen liegt.

2. Verfahren nach Anspruch 1, wobei das Polypropylen einen Schmelzfluss von 1,0 bis 4,0 g/10 min (nach ASTM D1238, Kondition L festgestellt) aufweist.

3. Verfahren nach Anspruch 1, wobei die Menge des alizyklischen Carboxylats weniger als 0,05 Gew.-% basierend auf dem Polypropylen beträgt.

4. Verfahren nach Anspruch 1, wobei die Menge des alizyklischen Carboxylats weniger als 0,04 Gew.-% basierend auf dem Polypropylen beträgt.

5. Verfahren nach Anspruch 1, wobei die Menge des alizyklischen Carboxylats in einem Bereich von 0,005 bis 0,04 Gew.-% basierend auf dem Polypropylen liegt.

6. Verfahren nach Anspruch 1, wobei das alizyklische Carboxylat ausgewählt ist aus der Gruppe bestehend aus Diester, Disäure, Diamid, Teilester, Teilsäure, Teilamid und den Teilester-Salzderivaten von Bicyclo[2.2.1]heptan sowie deren Mischungen.

7. Verfahren nach Anspruch 1, wobei das alizyklische Carboxylat ein alizyklisches Norbomendicarboxylat ist.

8. Verfahren nach Anspruch 1, ferner umfassend Schaumpolypropylen in Anwesenheit eines zweiten Kristallisierungs-Keimbildners, der sich vom alizyklischen Carboxylat unterscheidet.

9. Verfahren nach Anspruch 8, wobei der zweite Kristallisierungs-Keimbildner ausgewählt ist aus der Gruppe bestehend aus Organonatriumphosphaten, Natriumbenzoat, aromatischen Carboxylsäuren, aliphatischen Carboxylsäuren, Silikaten und den Aluminiumsilikaten von Alkali und Alkalierdmetallen, Zuckerderivaten sowie deren Mischungen.

10. Polypropylenharz für Schäumungsanwendungen umfassend Polypropylen mit einem Schmelzfluss von 0,3 bis 10 g/10 min (nach ASTM D1238, Kondition L festgestellt), einen alizyklischen Carboxylat-Kristallisierungs-Keimbildner und einen Schaumbildner, wobei die Menge des Schaumbildners in einem Bereich von 0,25 bis 5 Gew.-% basierend auf dem Polypropylen liegt.

11. Harz nach Anspruch 10, wobei das Polypropylen einen Schmelzfluss von 1,0 bis 4,0 g/10 min (nach ASTM D1238, Kondition L festgestellt) aufweist.

12. Harz nach Anspruch 10, wobei die Menge des alizyklischen Carboxylat weniger als 0,05 Gew.-% basierend auf dem Polypropylen beträgt.

13. Harz nach Anspruch 10, wobei das alizyklische Carboxylat ausgewählt ist aus der Gruppe bestehend aus Diester, Disäure, Diamid, Teilester, Teilsäure, Teilamid und den Teilester-Salzderivaten von Bicyclo[2.2.1]heptan sowie deren Mischungen.

14. Harz nach Anspruch 10, wobei das alizyklische Carboxylat ein alizyklisches Norbomendicarboxylat ist.

15. Harz nach Anspruch 10, ferner umfassend einen zweiten Kristallisierungs-Keimbildner, der sich vom alizyklischen Carboxylat unterscheidet.

16. Harz nach Anspruch 15, wobei der zweite Kristallisierungs-Keimbildner ausgewählt ist aus der Gruppe bestehend aus Organonatriumphosphaten, Natriumbenzoat, aromatischen Carboxylsäuren, aliphatischen Carboxylsäuren, Silikaten und den Aluminiumsilikaten von Alkali und Alkalierdmetallen, Zuckerderivaten sowie deren Mischungen.

17. Fließgepresste Schaumplatte, hergestellt durch das Verfahren umfassend das Schäumen und Fließpressen von Polypropylen mit einem Schmelzfluss von 0,3 bis 10 g/10 min (nach ASTM D1238, Kondition L festgestellt) in Anwesenheit eines alizyklischen Carboxylat-Kristallisierungs-Keimbildners und eines Schaumbildners, wobei die Menge des Schaumbildners in einem Bereich von 0,2 bis 10 Gew.-% basierend auf dem Polypropylen liegt.

18. Fließgepresste Schaumplatte nach Anspruch 17, wobei das Polypropylen einen Schmelzfluss von 1,0 bis 4,0 g/10 min (nach ASTM D1238, Kondition L festgestellt) aufweist.

19. Fliesgepresste Schaumplatte nach Anspruch 17, wobei die Menge des alizyklischen Carboxylats weniger als 0,05 Ges.-% basierend auf dem Polypropylen beträgt.

20. Fließgepresste Schaumplatte nach Anspruch 17, wobei das alizyklische Carboxylat ausgewählt ist aus der Gruppe bestehend aus Diester, Disäure, Diamid, Teilester, Teilsäure, Teilamid und den Teilester-Salzderivaten von Bicyclo[2.2.1]heptan sowie deren Mischungen.

21. Fließgepresste Schaumplatte nach Anspruch 17, wobei das alizyklische Carboxylat ein alizyklisches Norbomendicarboxylat ist.

22. Fließgepresste Schaumplatte nach Anspruch 17, wobei das Verfahren ferner Schaumpolypropylen in Anwesenheit eines zweiten Kristallisierungs-Keimbildners umfasst, der sich vom alizyklischen Carboxylat unterscheidet.

23. Fließgepresste Schaumplatte nach Anspruch 17, wobei der zweite Kristallisierungs-Keimbildner ausgewählt ist aus der Gruppe bestehend aus Organonatriumphosphaten, Natriumbenzoat, aromatischen Carboxylsäuren, aliphatischen Carboxylsäuren, Silikaten und den Aluminiumsilikaten von Alkali und Alkalierdmetallen, Zuckerderivaten sowie deren Mischungen.

24. Formling, der durch das Verfahren umfassend das Schäumen und Fließpressen von Polypropylen mit einem Schmelzfluss von 0,3 bis 10 g/10 min (nach ASTM D1238, Kondition L festgestellt) in Anwesenheit eines alizyklischen Carboxylat-Kristallisierungs-Keimbildners und eines Schaumbildners hergestellt worden ist, wobei die Menge des Schaumbildners in einem Bereich von 0,2 bis 10 Gew.-% basierend auf dem Polypropylen liegt.

25. Formling nach Anspruch 24, wobei das Polypropylen einen Schmelzfluss von 1,0 bis 4,0 g/10 min (nach ASTM D1238, Kondition L festgestellt) aufweist.

26. Formling nach Anspruch 24, wobei die Menge des alizyklischen Carboxylats weniger als 0,05 Gew.-% basierend auf dem Polypropylen beträgt.

27. Formling nach Anspruch 24, wobei das alizyklische Carboxylat ausgewählt ist aus der Gruppe bestehend aus Diester, Disäure, Diamid, Teilester, Teilsäure, Teilamid und den Teilester-Salzderivaten von Bicyclo[2.2.1]heptan sowie deren Mischungen.

28. Formling nach Anspruch 24, wobei das alizyklische Carboxylat ein alizyklisches Norbomendicarboxylat ist.

29. Formling nach Anspruch 24, wobei das Verfahren ferner Schaumpolypropylen in Anwesenheit eines zweiten Kristallisierungs-Keimbildners umfasst, der sich vom alizyklischen Carboxylat unterscheidet.

30. Formling nach Anspruch 25, wobei der zweite Kristallisierungs-Keimbildner ausgewählt ist aus der Gruppe bestehend aus Organonatriumphosphaten, Natriumbenzoat, aromatischen Carboxylsäuren, aliphatischen Carboxylsäuren, Silikaten und den Aluminiumsilikaten von Alkali und Alkalierdmetallen, Zuckerderivaten sowie deren Mischungen.

31. Formling nach Anspruch 24, wobei der Formling ausgewählt ist aus der Gruppe bestehend aus Tellern, Tassen, Schalen, Behältern, Schläuchen und Rohren.

## Revendications

1. Procédé pour produire un polypropylène expansé, comprenant l'expansion d'un polypropylène ayant un indice de fluage de 0,3 à 10 g/10 min (déterminé conformément à la norme ASTM D1238, condition L) en présence d'un agent de nucléation par cristallisation de type carboxylate alicyclique et d'un agent porogéne, dans lequel la quantité d'agent porogène est située dans la plage allant de 0,25 à 5 % en poids par rapport au polypropylène.

2. Procédé selon la revendication 1, dans lequel le polypropylène a un indice de fluage de 1,0 à 4,0 g/10 min (déterminé conformément à la norme ASTM D1238, condition L).

3. Procédé selon la revendication 1, dans lequel la quantité de carboxylate alicyclique est inférieure à 0,05 % en poids par rapport au polypropylène.

4. Procédé selon la revendication 1, dans lequel la quantité de carboxylate alicyclique est inférieure à 0,04 % en poids par rapport au polypropylène.

5. Procédé selon la revendication 1, dans lequel la quantité de carboxylate alicyclique est située dans la plage allant de 0,005 à 0,04 % en poids par rapport au polypropylène.

6. Procédé selon la revendication 1, dans lequel le carboxylate alicyclique est choisi dans le groupe constitué par un diester, un diacide, un diamide, un ester partiel, un acide partiel, un amide partiel, et les dérivés sels d'ester partiel de bicyclo[2.2.1]heptane et leurs mélanges.

7. Procédé selon la revendication 1, dans lequel le carboxylate alicyclique est un dicarboxylate de norbornane alicyclique.

8. Procédé selon la revendication 1, comprenant en outre l'expansion du polypropylène en présence d'un deuxième agent de nucléation par cristallisation différent du carboxylate alicyclique.

9. Procédé selon la revendication 8, dans lequel le deuxième agent de nucléation par cristallisation est choisi dans le groupe constitué par les phosphates de sodium organiques, le benzoate de sodium, les acides aromatiques carboxyliques, les acides aliphatiques carboxyliques, les silicates et aluminosilicates de métaux alcalins et alcalino-terreux, les dérivés de sucre, et leurs mélanges.

10. Résine de polypropylène pour des applications d'expansion comprenant un polypropylène ayant un indice de fluage de 0,3 à 10 g/10 min (déterminé conformément à la norme ASTM D1238, condition L), un agent de nucléation par cristallisation de type carboxylate alicyclique et un agent porogène, dans laquelle la quantité d'agent porogène est située dans la plage allant de 0,25 à 5 % en poids par rapport au polypropylène.

11. Résine selon la revendication 10, dans laquelle le polypropylène a un indice de fluage de 1,0 à 4,0 g/10 min (déterminé conformément à la norme ASTM D1238, condition L).

12. Résine selon la revendication 10, dans laquelle la quantité de carboxylate alicyclique est inférieure à 0,05 % en poids par rapport au polypropylène.

13. Résine selon la revendication 10, dans laquelle le carboxylate alicyclique est choisi dans le groupe constitué par un diester, un diacide, un diamide, un ester partiel, un acide partiel, un amide partiel, et les dérivés sels d'ester partiel de bicyclo[2.2.1]heptane et leurs mélanges.

14. Résine selon la revendication 10, dans laquelle le carboxylate alicyclique est un dicarboxylate de norbornane alicyclique.

15. Résine selon la revendication 10, comprenant en outre un deuxième agent de nucléation par cristallisation différent du carboxylate alicyclique.

16. Résine selon la revendication 15, dans laquelle le deuxième agent de nucléation par cristallisation est choisi dans le groupe constitué par les phosphates de sodium organiques, le benzoate de sodium, les acides aromatiques carboxyliques, les acides aliphatiques carboxyliques, les silicates et aluminosilicates de métaux alcalins et alcalino-terreux, les dérivés de sucre, et leurs mélanges.

17. Feuille de mousse extrudée produite par le procédé comprenant l'expansion et l'extrusion d'un polypropylène ayant un indice de fluage de 0,3 à 10 g/10 min (déterminé conformément à la norme ASTM D1238, condition L) en présence d'un agent de nucléation par cristallisation de type carboxylate alicyclique et d'un agent porogène, dans laquelle la quantité d'agent porogène est située dans la plage allant de 0,2 à 10 % en poids par rapport au polypropylène.

18. Feuille de mousse extrudée selon la revendication 17, dans laquelle le polypropylène a un indice de fluage de 1,0 à 4,0 g/10 min (déterminé conformément à la norme ASTM D1238, condition L).

19. Feuille de mousse extrudée selon la revendication 17, dans laquelle la quantité de carboxylate alicyclique est inférieure à 0,05 % en poids par rapport au polypropylène.

20. Feuille de mousse extrudée selon la revendication 17, dans laquelle le carboxylate alicyclique est choisi dans le groupe constitué par un diester, un diacide, un diamide, un ester partiel, un acide partiel, un amide partiel, et les dérivés sels d'ester partiel de bicyclo[2.2.1]heptane et leurs mélanges.

21. Feuille de mousse extrudée selon la revendication 17, dans laquelle le carboxylate alicyclique est un dicarboxylate de norbornane alicyclique.

22. Feuille de mousse extrudée selon la revendication 17, dans laquelle le procédé comprend en outre l'expansion du polypropylène en présence d'un deuxième agent de nucléation par cristallisation différent du carboxylate alicyclique.

23. Feuille de mousse extrudée selon la revendication 17, dans laquelle le deuxième agent de nucléation par cristallisation est choisi dans le groupe constitué par les phosphates de sodium organiques, le benzoate de sodium, les acides aromatiques carboxyliques, les acides aliphatiques carboxyliques, les silicates et aluminosilicates de métaux alcalins et alcalino-terreux, les dérivés de sucre, et leurs mélanges.

24. Article moulé produit par le procédé comprenant l'expansion et le moulage d'un polypropylène ayant un indice de fluage de 0,3 à 10 g/10 min (déterminé conformément à la norme ASTM D1238, condition L) en présence d'un agent de nucléation par cristallisation de type carboxylate alicyclique et d'un agent porogène, dans lequel la quantité d'agent porogène est située dans la plage allant de 0,2 à 10 % en poids par rapport au polypropylène.

25. Article moulé selon la revendication 24, dans lequel le polypropylène a un indice de fluage de 1,0 à 4,0 g/10 min (déterminé conformément à la norme ASTM D1238, condition L).

26. Article moulé selon la revendication 24, dans lequel la quantité de carboxylate alicyclique est inférieure à 0,05 % en poids par rapport au polypropylène.

27. Article moulé selon la revendication 24, dans lequel le carboxylate alicyclique est choisi dans le groupe constitué par un diester, un diacide, un diamide, un ester partiel, un acide partiel, un amide partiel, et les dérivés sels d'ester partiel de bicyclo[2.2.1]heptane et leurs mélanges.

28. Article moulé selon la revendication 24, dans lequel le carboxylate alicyclique est un dicarboxylate de norbornane alicyclique.

29. Article moulé selon la revendication 24, dans lequel le procédé comprend en outre l'expansion du polypropylène en présence d'un deuxième agent de nucléation par cristallisation différent du carboxylate alicyclique.

30. Article moulé selon la revendication 25, dans lequel le deuxième agent de nucléation par cristallisation est choisi dans le groupe constitué par les phosphates de sodium organiques, le benzoate de sodium, les acides aromatiques carboxyliques, les acides aliphatiques carboxyliques, les silicates et aluminosilicates de métaux alcalins et alcalino-terreux, les dérivés de sucre, et leurs mélanges.

31. Article moulé selon la revendication 24, lequel article est choisi dans le groupe constitué par les assiettes, les tasses, les plateaux, les récipients, les tubes et les tuyaux.
